# EUROPEAN PATENT SPECIFICATION

(11) **EP 3 964 047 B1**
(45) Date of publication and mention of the grant of the patent: **28.08.2024**
(21) Application number: 21192774.4
(22) Date of filing: 24.08.2021
(51) Int. Cl.: A01F 15/18

(54) **CROP STOP FOR BALE ROLL**
ERNTEGUTSTOPPER FÜR EINE WALZE EINER RUNDBALLENPRESSE
BUTÉE DE RÉCOLTE POUR UN ROULEAU D'UNE PRESSE À BALLES

(30) Priority: 02.09.2020 US 202017010527
(43) Date of publication of application: 09.03.2022
(73) Proprietor: Deere & Company, Moline, IL 61265 (US)
(72) Inventor: PILCHER, STEVEN R, 68163 Mannheim (DE)
(74) Representative: Stein, Stefan

(56) References cited:
- EP-A1- 0 745 319
- EP-A1- 1 163 837
- DE-U1- 29 515 629
- GB-A- 2 069 403
- GB-A- 2 092 086
- JP-A- 2013 118 833
- US-A- 1 780 481
- US-A- 4 890 449
- US-A- 6 098 390
- US-A1- 2014 346 015

## Description

### Related Applications

N/A.

### Field of the Disclosure

The present disclosure relates generally to a baler implement, and more particularly to a roller of a baler.

### Background of the Disclosure

After an operator utilizes a cutting implement, such as but not limited to a windrower (swather) to cut small grain crops or hay, the operator may later, use another implement, such as a baler, to collect the windrow and form a bale. Normally, the baler has one or more rolls that directly or indirectly engage the crop materials during the bale formation process, which may include feeding and accumulating the crop materials, and wrapping and ejecting the bale. US 6,098,390 A discloses a belt drive roll having a cylindrically arranged pair of wipers which cause any crop material engaged there to be moved inwardly from the adjacent bale chamber side wall. EP 1 163 837 A1 and GB 2 092 086 A disclose a crop conveyor having a deflector plate mounted at the downstream end of the conveyor comprising an edge. US 4,890,449 A, GB 2 069 403 A, JP 2013-118833 A and US 1,780,481 A also disclose plate like crop stop/deflector units. DE 295 156 29 U1, EP 0 745 319 A1 and US 2014/346015 A1 disclose protrusions on a roll.

### Summary of the Disclosure

According to the present invention, a baler is provided as claimed in claim 1. The baler includes a main frame and at least one roll. The main frame includes two side walls spaced apart and is operable to form a bale therebetween. The roll includes a roll body, at least one protrusion, and at least one crop stop apparatus. The roll body extends along a central longitudinal axis between a first roll end and a second roll end. Each of the first roll end and the second roll end is rotatably coupled to a respective one of the side walls. The roll body defines an exterior circumferential surface extending between the first roll end and the second roll end along the central longitudinal axis. The protrusion extends from the exterior circumferential surface of the roll body at least partially between the first roll end and the second roll end. The crop stop apparatus is disposed adjacent to one of the first roll end or the second roll end on the exterior circumferential surface of the roll body. The crop stop apparatus is operable to limit crop movement axially along the central longitudinal axis beyond one of the first roll end or the second roll end relative to a center of the roll body.

The at least one crop stop apparatus includes at least one crop stop unit having a first stop portion and a second stop portion, with the first stop portion arranged to engage crop earlier than the second stop portion when the roll body rotates in a crop processing direction.

A first surface area of the first stop portion has narrower distance from the first roll end than does a second surface area of the second stop portion.

The at least one protrusion is a helical pattern such that one end of the at least one protrusion engages with crop earlier than does the other end of the at least one protrusion when the roll body rotates in the crop processing direction.

In one aspect of the disclosure, each side wall includes a support plate, and the at least one roll includes two studs coupled to a respective one of the first roll end or second roll end and rotatably coupled to a respective one of the support plates.

In one aspect of the disclosure, the at least one of the side walls includes a side sheet having a clearance hole, and one of the first roll end or the second roll end is positioned through the clearance hole and between the support plate and the side sheet, and with the at least one crop stop apparatus operable to move the crop out of the clearance hole and toward the center of the roll body axially along the central longitudinal axis.

In one embodiment of the present invention, the first surface area of first stop portion extends through a clearance hole and is positioned between the support plate and the side sheet.

In one embodiment of the present invention, the at least one crop stop apparatus includes one crop stop apparatus positioned on a portion of the roll body adjacent to the first roll end and another one crop stop apparatus positioned on a portion of the roll body adjacent to the second roll end.

In one embodiment of the present invention, the at least one protrusion includes multiple protrusions, each crop stop apparatus includes a crop stop unit disposed between adjacent two of the protrusions.

In one embodiment of the present invention, each protrusion defines a helical pattern, such that between the same adjacent two of the protrusions, one crop stop unit positioned on the portion of the roll body adjacent to the second roll end engages crop earlier than does one crop stop unit positioned on the portion of the roll body adjacent to the first roll end.

In one aspect of the disclosure, the at least one crop stop apparatus includes a crop stop unit which is disk shaped.

In one aspect of the disclosure, a roll of a baler is provided. The roll includes a roll body, at least one protrusion, and at least one crop stop apparatus. The roll body extends along a central longitudinal axis between a first roll end and a second roll end. Each of the first roll end and the second roll end is operably rotatably coupled to a respective one of side walls of the baler. The roll body defines an exterior circumferential surface extending between the first roll end and the second roll end along the central longitudinal axis. The at least one protrusion extends from the exterior circumferential surface of the roll body at least partially between the first roll end and the second roll end. The at least one crop stop apparatus is disposed adjacent to one of the first roll end or the second roll end on the exterior circumferential surface of the roll body. The at least one crop stop apparatus is operable to limit crop movement axially along the central longitudinal axis beyond one of the first roll end or the second roll end relative to a center of the roll body.

Other features and aspects will become apparent by consideration of the detailed description and accompanying drawings.

### Brief Description of the Drawings

The detailed description of the drawings refers to the accompanying figures.
FIG. 1 demonstrates a side view of a baler coupled to a tractor and collecting swaths.
FIG. 2 demonstrates a partial perspective view of a bale forming chamber of the baler, showing a roll of the baler.
FIG. 3 demonstrates a partial perspective view of the roll and the elements near the roll.
FIG. 4 is a bottom view of baler shown in FIG. 3.
FIG. 5 is a cross-sectional perspective view of the baler shown in FIG. 4.
FIG. 6 is a front view of the baler shown in FIG. 5.
FIG. 7 demonstrates a partial perspective view of the roll and the elements near the roll in another embodiment.

### Detailed Description of the Drawings

The following describes one or more explanatory embodiments or implementations of the disclosed roll of baler, the baler, as shown in the accompanying figures of the drawings described briefly above. Modifications of the embodiments and implementations may be contemplated by a person of skill in the art. The disclosed roll(s) include a starter roll which is located at a bale forming chamber of the baler. The starter roll engages with crop and is configured to rotate crop. The crop is later rolled in spiral fashion into a cylindrical bale. The disclosed roll(s) may include one or more rolls other than the starter roll which also assist the bale forming process. The disclosed baler may include but is not limit to a variable baling chamber (round) baler and a fixed baling chamber (round) baler.

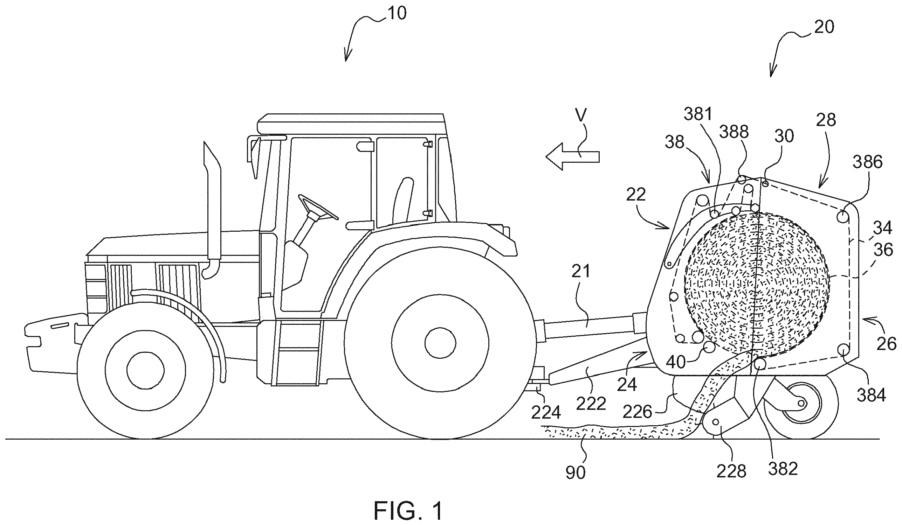

Referring to FIG. 1, a tractor 10 is towing a baler 20. In this embodiment, the baler 20 is a variable baling chamber baler. The baler 20 includes a main frame 22. The main frame 22 connects a rear part of a draft tongue 222 and the tractor 10 connects a front part of the draft tongue 222 via a clevis arrangement 224. As shown in FIG. 1, when the baler 20 moves with the tractor 10, the baler 20 moves in a travel direction V. A crop inlet 226 located at a front lower region of the baler 20 is configured to be fed with crop 90 via a pickup 228.

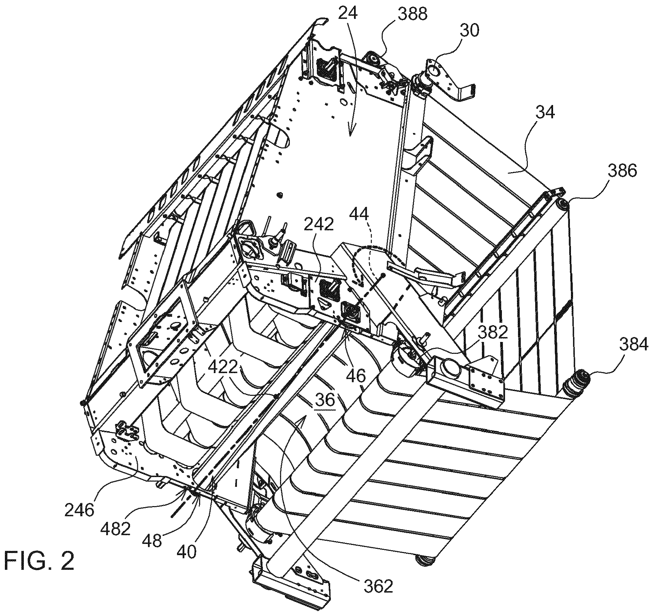

The main frame 22 includes two side walls 24, for example in a forward region. The two side walls 24 are symmetrical and spaced apart. The main frame 22 may also include two side walls 26 in a rear region. The two side walls 26 are also symmetrical and spaced apart. The bale B is formed between the side walls 24, 26. The two sides walls 26 may be a part of a discharge gate, which is pivotally mounted on an upper rear portion of the side walls 24 via a horizontal pivot arrangement 30. Referring to FIGS. 1 and 2, crop 90 is rolled up by the bale forming belts 34, which defines a bale forming chamber 36 with multiple rolls 38. The size of bale forming chamber 36, in this embodiment, is variable during the formation of the bale B. The bale forming belts 34, each of which is aligned in a lateral (axial) direction, are driven or directed by some of the rolls 38. The surfaces of the rolls 38 may include high friction materials, such as rubber, so as to ensure a better transportation for the bale forming belts 34. Some rolls 38, like rolls 382, 384, 386, 388 are fixed rolls that coupled between the two side walls 24 or two side walls 26. Some rolls 38, like roll 381, are moveable on a pivot arm, in response to crop 90 rolled up. Some rolls 38, like rolls 384, 386, direct a portion of the bale forming belts 34 in positions away from the bale B. Some rolls 38, like roll 382, direct a portion of the bale forming belts 34 engaging with crop 90 rolling and defining the bale forming chamber 36.

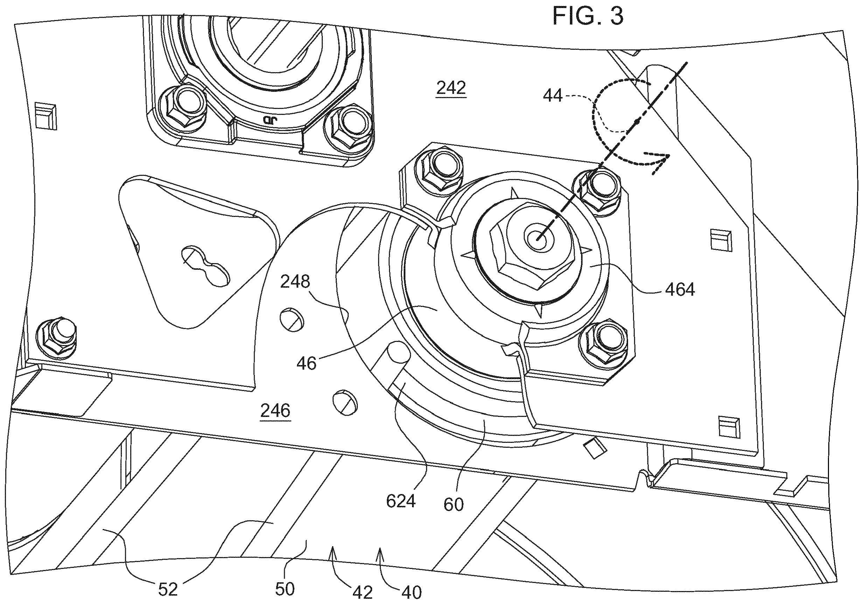

There are some rolls which do not engage with the bale forming belt 34 but directly engage with crop 90 during baling process. For example, according to the present invention, roll 40, which is a starter roll driven by a chain drive (not shown) or other arrangement, is located at a bale forming chamber inlet 362 for rolling crop 90. The roll 40 is equipped with at least one crop stop apparatus 60 (FIG.3) operable to limit crop 90 moving axially along a central longitudinal axis 44 of the roll 40, beyond the roll ends of the roll 40. In another implementations, which is not shown in FIG. 1, the crop stop apparatus 60 may be applied to another roll(s), other than roll 40 but also directly engage with crop 90 during baling process (some variable chamber balers have more than one roll directly engaging crop 90 for rolling the crop.) Again, the crop stop apparatus 60 may be applied to one or more rolls of a fixed chamber baler (not shown) which engage with crop 90 during baling process. In addition, the crop stop apparatus 60 may also be applied to one or more rolls 38, such as roll 382, to prevent crop 90 from flowing into the gap between roll end thereof and side wall while it directs or drives the bale forming belt 34.

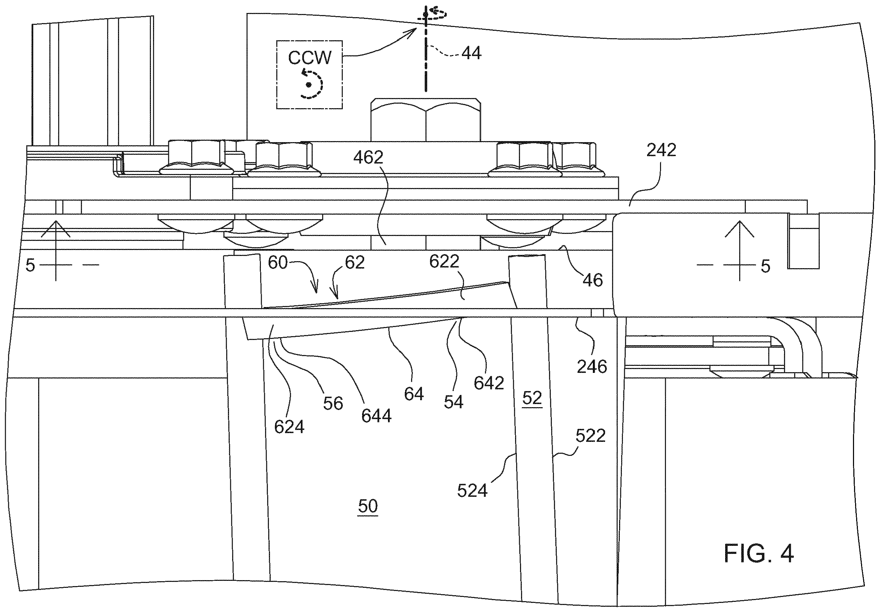

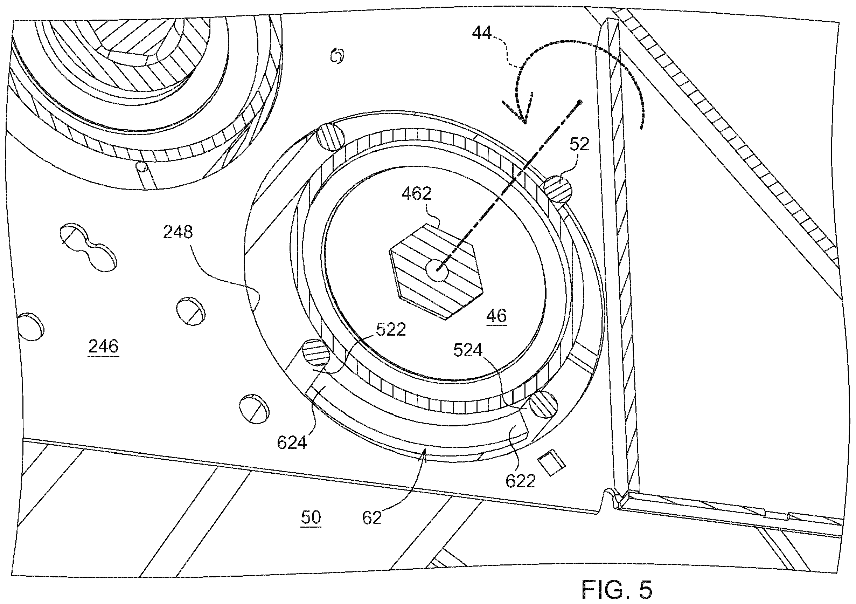

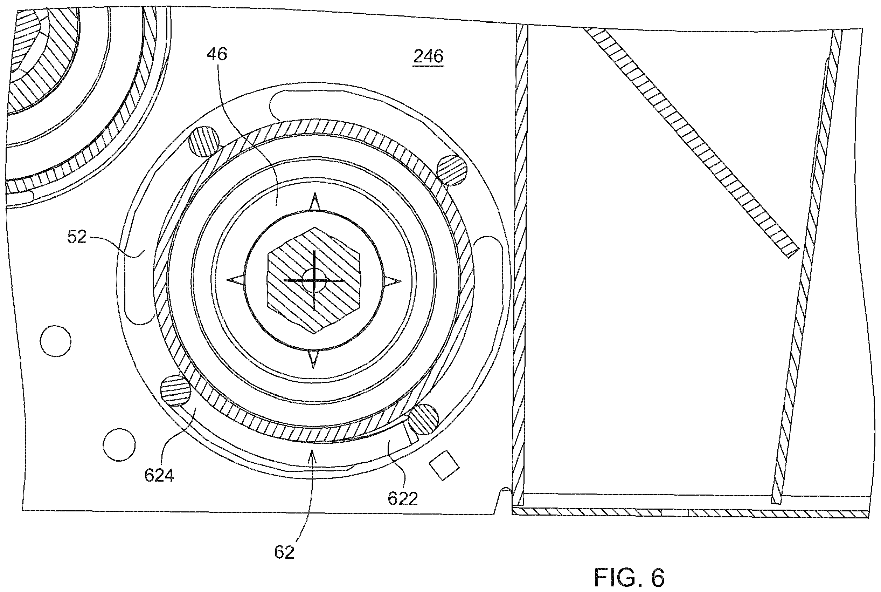

Referring to FIGS. 2 and 3, as mentioned before, the roll 40 (starter roll) has at least one crop stop apparatus 60. The roll 40 includes a roll body 42 extending along a central longitudinal axis 44 between a first roll end 46 and a second roll end 48. The roll 40 described herein may include one, or more than one crop stop apparatus 60. In the first embodiment, the number of the at least one crop stop apparatus 60 is two, one disposed adjacent to the first roll end 46 and the other disposed adjacent to the second roll end 48. Each of the first roll end 46 and the second roll end 48 is rotatably coupled to a respective one of the side walls 24. Because the first roll end 46 and the second roll end 48 are symmetric to each other, FIGS. 3-6 merely demonstrate the first roll end 46 and elements around the first roll end 46 for succinctness. As shown in FIGS. 3 and 4, one of the side walls 24 includes a support plate 242 (bearing mount plate) and a side sheet 246 parallel to the support plate 242. The other side wall 24 has similar arrangement. The roll 40 includes two studs 462, 482 coupled to a respective one of the first roll end 46 or second roll end 48 and rotatably coupled to a respective one of the support plates 242. Referring to FIGS. 3 and 4, the stud 462 is coupled to the support plate 242 by the bearing 464. The side sheet 246 has a clearance hole 248; the first roll end 46 is positioned through the clearance hole 248 and between the support plate 242 and the side sheet 246.

Referring to FIGS. 2-5, the roll body 42 defines an exterior circumferential surface 50 extending between the first roll end 46 and the second roll end 48 along the central longitudinal axis 44. At least one protrusion 52 extends from the exterior circumferential surface 50 of the roll body 42 at least partially between the first roll end 46 and the second roll end 48. In this embodiment, the number of the protrusions 52 is four. The protrusions 52 may be distributed evenly on the exterior circumferential surface 50. Each protrusion 52 has a leading portion 522 and a tailing portion 524 which follows the leading portion 522 when the roll 40 rotates in a crop processing direction, for example, counterclockwise about the central longitudinal axis 44 as shown in FIGS. 3, 4, and 5. Each protrusion 52 defines a helical pattern such that an end of each protrusion 52 adjacent to the second roll end 48 engages with crop 90 moving laterally along the central longitudinal axis 44 earlier than does the other end of the protrusion 52 adjacent to the first roll end 46 when the roll 40 rotates in the crop processing direction. Having the protrusions 52 that are helical may increase the area of each protrusion 52 engaging with crop 90.

As shown in FIG. 4, there is a gap between the first roll end 46 and the support plate 242 of the side wall 24. Without the crop stop apparatus 60, crop 90 may move freely toward side sheet 246 and through the clearance hole 248, and accumulate between the support plate 242 and side sheet 246. Crop 90 may enter the gap between the first roll end 46 and the support plate 242 while the roll 40 rotates in the crop processing direction. Therefore the at least one crop stop apparatus 60 is disposed adjacent to one of the first roll end 46 or the second roll end 48 on the exterior circumferential surface 50 of the roll body 42. The at least one crop stop apparatus 60 is operable to limit crop 90 movement axially along the central longitudinal axis 44 beyond one of the first roll end 46 or the second roll end 48 relative to a center 422 of the roll body 42. In the first embodiment, the roll 40 has two crop stop apparatus 60 respectively positioned on the first roll end 46 and the second roll end 48. Referring to FIGS. 2, 5 and 6, the four protrusions 52 extend from the exterior circumferential surface 50 of the roll body 42 between the first roll end 46 and the second roll end 48 so as to create four intervals. Each crop stop apparatus 60 includes at least one crop stop unit 62 disposed between adjacent two of the protrusions 52. Each crop stop apparatus 60 in the first embodiment includes four crop stop units 62 respectively disposed between the four protrusions 52. It is noted that, for clarity, FIGS. 3-6 merely demonstrate one crop stop unit 62. In another implementation, more than one crop stop units 62 may be disposed between the adjacent two protrusions 52.

In the first embodiment, because the protrusions 52 include the helical pattern, it may have more area to engage with crop 90 than does protrusions having straight axial pattern. The helical pattern of the protrusions 52 allows the roll 40 to run smoothly against the bale B. With reference to FIG. 2, the end of each protrusion 52 adjacent to the second roll end 48 engages with crop 90 earlier than does the other end of the protrusion 52 adjacent to the first roll end 46 when the roll 40 rotates in the crop processing direction (counterclockwise) about the central longitudinal axis 44. Some of crop 90 is forced toward the side sheet 246 adjacent to the first roll end 46 or side sheet 246 adjacent to the second roll end 48. The crop stop apparatus 60 is/are disposed on one or both of the first roll end 46 and the second roll end 48 is/are operable to move crop 90 out of the clearance hole 248 and toward the center 422 of the roll body 42 axially along the central longitudinal axis 44. The detail configuration of the crop stop unit 62 of the crop stop apparatus 60 is described below with FIGS. 3-6.

The crop stop unit 62 includes an engaging surface 64 configured to engage with the crop 90. The engaging surface 64 in the first embodiment is an inner surface. The engaging surface 64 has a first surface area 642 and a second surface area 644. As shown in FIG. 4, the engaging surface 64 of the crop stop unit 62 has an offset angle relative to the first roll end 46. The crop stop unit 62 has a first stop portion 622 having the first surface area 642 and a second stop portion 624 having the second surface area 644. As shown in FIG. 4, the crop stop unit 62 is adjacent to the first roll end 46, and the first surface area 642 of the first stop portion 622 has narrower distance from the first roll end 46 than does the second surface area 644 of the second stop portion 624. The first surface area 642 of the first stop portion 622 engages with crop 90 earlier than does the second surface area 644 of the second stop portion 624 engaging crop 90 when the roll body 42 rotates in a crop processing direction. The first surface area 642 of the first stop portion 622 extends through the clearance hole 248 and is positioned between the support plate 242 and the side sheet 246. The second surface area 644 of second stop portion 624 is positioned on the inner side relative to the side sheet 246. A tailing portion 524 of the protrusion 52 is followed by the first stop portion 622 of the crop stop unit 62 and the second stop portion 624 is followed by a leading portion 522 of another protrusion 52 when the roll body 42 rotates in the crop processing direction. The exterior circumferential surface 50 of the roll body 42 has a first location 54 adjacent to the first surface area 642 of the first stop portion 622 and a second location 56 adjacent to the second surface area 644 of the second stop portion 624. As shown in FIG. 4, the crop stop unit 62 is adjacent to the first roll end 46, and the first location 54 has narrower distance from the first roll end 46 than does the second location 56. Adjacent to the second roll end 48, another crop stop unit (not shown) is symmetric to the crop stop unit 62 adjacent to the first roll end 46 such that a first location (not shown) has narrower distance from the second roll end 46 than does the second location (not shown). Because the configuration of the engaging surface 64 of the crop stop unit 62 has the offset angle, crop 90 is moved out of the clearance hole 248 and toward the center 422 of the roll body 42 axially along the central longitudinal axis 44.

Because of the helical pattern of the protrusions 52, between the same adjacent two of the protrusions 52, one crop stop unit 62 positioned on the portion of the roll body 42 adjacent to the second roll end 48 engages crop 90 earlier than does one crop stop unit 62 positioned on the portion of the roll body 42 adjacent to the first roll end 46.

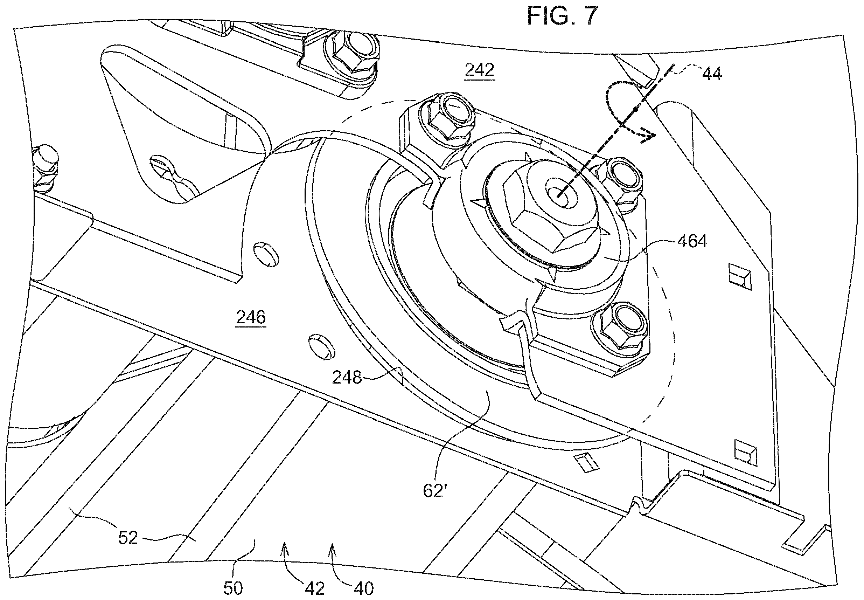

Referring to FIG. 7, in the second embodiment that does not form part of the present invention, the crop stop apparatus 60 includes a crop stop unit 62' which is disk shaped. The crop stop unit 62' is positioned on exterior circumferential surface 50 adjacent to the first roll end 46 and/or the second roll end 48. The crop stop unit 62' is positioned between the support 242 and the side sheet 246. The crop stop unit 62', like the crop stop unit 62 in the first embodiment, is operable to limit crop movement axially along the central longitudinal axis 44 beyond one of the first roll end 46 or the second roll end 48 relative to a center 422 of the roll body 42.

It is noted that the crop stop apparatus 60 may be applied to another roll with non-helical protrusions, such as with straight axial protrusions or without protrusion.

Without in any way limiting the scope, interpretation, or application of the claims appearing below, a technical effect of one or more of the example embodiments disclosed herein is to provide at least one crop stop apparatus on the roll, so as to limit crop movement axially along the central longitudinal axis of the roll toward the end(s) of the roll.

While the above describes example embodiments of the present disclosure, these descriptions should not be viewed in a limiting sense. Rather, other variations and modifications may be made without departing from the scope of the present invention as defined in the appended claims.

## Claims

1. A baler, comprising:
a main frame (22) including two side walls (24) spaced apart and operable to form a bale therebetween;
at least one roll (40), wherein the roll (40) is a starter roll which is located at a bale forming chamber inlet (362) of the baler, the at least one roll including:
a roll body (42) extending along a central longitudinal axis (44) between a first roll end (46) and a second roll end (48), wherein each of the first roll end (46) and the second roll end (48) is rotatably coupled to a respective one of the side walls (24);
wherein the roll body (42) defines an exterior circumferential surface (50) extending between the first roll end (46) and the second roll end (48) along the central longitudinal axis (44), and is configured to directly engage with crop (90);
at least one protrusion (52) extending from the exterior circumferential surface (50) of the roll body (42) at least partially between the first roll end (46) and the second roll end (48); and at least one crop stop apparatus (60) disposed adjacent to one of the first roll end (46) or the second roll end (48) on the exterior circumferential surface (50) of the roll body (42), and the at least one protrusion (52) is a helical pattern such that one end of the at least one protrusion (52) engages with crop earlier than does the other end of the at least one protrusion (52) when the roll body (42) rotates in the crop processing direction, the at least one crop stop apparatus (60) includes at least one crop stop unit (62), and the at least one crop stop unit (62) includes an engaging surface (64) configured to engage with the crop (90), and the engaging surface (64) is an inner surface, and the engaging surface (64) has a first surface area (642) and a second surface area (644), and the engaging surface (64) has an offset angle relative to the first roll end (46),
and the at least one crop stop unit (62) has a first stop portion (622) having the first surface area (642) and a second stop portion (624) having the second surface area (644), and the at least one crop stop unit (62) is adjacent to the first roll end (46), and the first surface area (642) of the first stop portion (622) has narrower distance from the first roll end (46) than does the second surface area (644) of the second stop portion (624), and the first surface area (642) of the first stop portion (622) is configured to engage with crop (90) earlier than does the second surface area (644) of the second stop portion (624) engaging crop (90) when the roll body (42) rotates in a crop processing direction,
wherein the at least one crop stop unit (62) is circumferentially disposed between adjacent two protrusions (52), wherein the at least one crop stop apparatus (60) is operable to limit crop movement axially along the central longitudinal axis (44) beyond one of the first roll end (46) or the second roll end (48) relative to a center of the roll body (42).

2. The baler according to claim 1, wherein the first surface area (642) of the first stop portion (622) extends through a clearance hole (248) and is positioned between the support plate (242) and the side sheet (246).

3. The baler according to at least one of the claims 1 to 2, wherein the at least one crop stop apparatus (60) includes one crop stop apparatus (60) positioned on a portion of the roll body (42) adjacent to the first roll end (46) and another one crop stop apparatus (60) positioned on a portion of the roll body (42) adjacent to the second roll end (48).

4. The baler according to at least one of the claims 1 to 3, wherein the two protrusions (52) include multiple protrusions (52), each crop stop apparatus (60) includes a crop stop unit (62) disposed between adjacent two of the protrusions (52).

5. The baler according to at least one of the claims 1 to 4, wherein each protrusion (52) defines a helical pattern, such that between the same adjacent two of the protrusions (52), one crop stop unit (62) positioned on the portion of the roll body (42) adjacent to the second roll end (48) engages crop earlier than does one crop stop unit (62) positioned on the portion of the roll body (42) adjacent to the first roll end (46).

## Patentansprüche

1. Ballenpresse, umfassend:
einen Hauptrahmen (22) mit zwei Seitenwänden (24), die voneinander beabstandet und dazu funktionsfähig sind, einen Ballen dazwischen auszubilden,
mindestens eine Walze (40), wobei die Walze (40) eine Starterwalze ist, die an einem Ballenbildungskammereinlass (362) der Ballenpresse angeordnet ist, wobei die mindestens eine Walze Folgendes umfasst:
einen Walzenkörper (42), der sich entlang einer mittigen Längsachse (44) zwischen einem ersten Walzenende (46) und einem zweiten Walzenende (48) erstreckt, wobei das erste Walzenende (46) und das zweite Walzenende (48) jeweils mit einer jeweiligen Seitenwand (24) drehbar gekoppelt ist;
wobei der Walzenkörper (42) eine äußere Umfangsfläche (50) definiert, die sich zwischen dem ersten Walzenende (46) und dem zweiten Walzenende (48) entlang der mittigen Längsachse (44) erstreckt und dazu ausgelegt ist, in das Erntegut (90) einzugreifen;
mindestens einen Vorsprung (52), der sich von der äußeren Umfangsfläche (50) des Walzenkörpers (42) zumindest teilweise zwischen dem ersten Walzenende (46) und dem zweiten Walzenende (48) erstreckt; und mindestens eine Erntegutstoppervorrichtung (60), die an das erste Walzenende (46) oder das zweite Walzenende (48) auf der äußeren Umfangsfläche (50) des Walzenkörpers (42) angrenzend angeordnet ist, und wobei der mindestens eine Vorsprung (52) schraubenförmig ist, sodass ein Ende des mindestens einen Vorsprungs (52) eher in das Erntegut eingreift als das andere Ende des mindestens einen Vorsprungs (52), wenn sich der Walzenkörper (42) in die Erntegutverarbeitungsrichtung dreht, wobei die mindestens eine Erntegutstoppervorrichtung (60) mindestens eine Erntegutstoppereinheit (62) umfasst, und wobei die mindestens eine Erntegutstoppereinheit (62) eine Eingriffsfläche (64) umfasst, die dazu ausgelegt ist, in das Erntegut (90) einzugreifen, und wobei die Eingriffsfläche (64) eine Innenfläche ist, und wobei die Eingriffsfläche (64) eine erste Oberfläche (642) und eine zweite Oberfläche (644) aufweist, und wobei die Eingriffsfläche (64) in Bezug zum ersten Walzenende (46) einen versetzten Winkel aufweist, und wobei die mindestens eine Erntegutstoppereinheit (62) einen ersten Stopperabschnitt (622) mit der ersten Oberfläche (642) und einen zweiten Stopperabschnitt (624) mit der zweiten Oberfläche (644) aufweist, und wobei die mindestens eine Erntegutstoppereinheit (62) an das erste Walzenende (46) angrenzt, und wobei die erste Oberfläche (642) des ersten Stopperabschnitts (622) einen engeren Abstand zum ersten Walzenende (46) aufweist als die zweite Oberfläche (644) des zweiten Stopperabschnitts (624), und wobei die erste Oberfläche (642) des ersten Stopperabschnitts (622) dazu ausgelegt ist, eher in das Erntegut (90) einzugreifen als die zweite Oberfläche (644) des zweiten Stopperabschnitts (624), wobei in das Erntegut (90) eingegriffen wird, wenn sich der Walzenkörper (42) in die Erntegutverarbeitungsrichtung dreht,
wobei die mindestens eine Erntegutstoppereinheit (62) in Umfangsrichtung zwischen zwei angrenzenden Vorsprüngen (52) angeordnet ist, wobei die mindestens eine Erntegutstoppervorrichtung (60) dazu funktionsfähig ist, die Erntegutbewegung axial entlang der mittigen Längsachse (44) über das erste Walzenende (46) oder das zweite Walzenende (48) hinaus in Bezug zur Mitte des Walzenkörpers (42) zu begrenzen.

2. Ballenpresse nach Anspruch 1, wobei sich die erste Oberfläche (642) des ersten Stopperabschnitts (622) durch eine Durchgangsbohrung (248) erstreckt und zwischen der Stützplatte (242) und der Seitenbeplankung (246) positioniert ist.

3. Ballenpresse nach mindestens einem der Ansprüche 1 bis 2, wobei die mindestens eine Erntegutstoppervorrichtung (60) eine Erntegutstoppervorrichtung (60), die auf einem Abschnitt des Walzenkörpers (42) an das erste Walzenende (46) angrenzend positioniert ist, und eine weitere Erntegutstoppervorrichtung (60), die auf einem Abschnitt des Walzenkörpers (42) an das zweite Walzenende (48) angrenzend positioniert ist, umfasst.

4. Ballenpresse nach mindestens einem der Ansprüche 1 bis 3, wobei die zwei Vorsprünge (52) mehrere Vorsprünge (52) umfassen, wobei jede Erntegutstoppervorrichtung (60) eine Erntegutstoppereinheit (62) umfasst, die zwischen zwei angrenzenden Vorsprüngen (52) angeordnet ist.

5. Ballenpresse nach mindestens einem der Ansprüche 1 bis 4, wobei jeder Vorsprung (52) ein schraubenförmiges Muster definiert, sodass zwischen denselben zwei angrenzenden Vorsprüngen (52) eine Erntegutstoppereinheit, die (62) auf dem Abschnitt des Walzenkörpers (42) an das zweite Walzenende (48) angrenzend positioniert ist, eher in das Erntegut eingreift als die Erntegutstoppereinheit (62), die auf dem Abschnitt des Walzenkörpers (42) an das erste Walzenende (46) angrenzend positioniert ist.

## Revendications

1. Presse à balles comprenant :
un châssis principal (22) comprenant deux parois latérales (24) mutuellement espacées et servant à former une balle entre elles ;
au moins un rouleau (40), le rouleau (40) étant un rouleau initial qui est situé au niveau d'une entrée de chambre de formation de balle (362) de la presse à balles, l'au moins un rouleau comprenant :
un corps de rouleau (42) s'étendant le long d'un axe longitudinal central (44) entre une première extrémité de rouleau (46) et une seconde extrémité de rouleau (48), chacune de la première extrémité de rouleau (46) et la seconde extrémité de rouleau (48) étant accouplée à rotation à une paroi respective parmi les parois latérales (24) ;
le corps de rouleau (42) définissant une surface circonférentielle extérieure (50) s'étendant entre la première extrémité de rouleau (46) et la seconde extrémité de rouleau (48) le long de l'axe longitudinal central (44), et étant conçu pour entrer directement en contact avec le matériau de culture (90) ;
au moins une saillie (52) s'étendant à partir de la surface circonférentielle extérieure (50) du corps de rouleau (42) au moins partiellement entre la première extrémité de rouleau (46) et la seconde extrémité de rouleau (48) ; et au moins un appareil d'arrêt de matériau de culture (60) disposé près de l'une de la première extrémité de rouleau (46) et la seconde extrémité de rouleau (48) sur la surface circonférentielle extérieure (50) du corps de rouleau (42), et l'au moins une saillie (52) présentant une forme hélicoïdale de telle sorte qu'une extrémité de l'au moins une saillie (52) entre en contact avec le matériau de culture plus tôt que l'autre extrémité de l'au moins une saillie (52) lorsque le corps de rouleau (42) tourne dans le sens de traitement de matériau de culture, l'au moins un appareil d'arrêt de matériau de culture (60) comprenant au moins une unité d'arrêt de matériau de culture (62), et l'au moins une unité d'arrêt de matériau de culture (62) comprenant une surface de contact (64) conçue pour entrer en contact avec le matériau de culture (90), et la surface de contact (64) étant une surface intérieure, et la surface de contact (64) présentant une première région de surface (642) et une seconde région de surface (644), et la surface de contact (64) présentant un angle de décalage relativement à la première extrémité de rouleau (46), et l'au moins une unité d'arrêt de matériau de culture (62) comportant une première partie d'arrêt (622) comportant la première région de surface (642) et une seconde partie d'arrêt (624) comportant la seconde région de surface (644), et l'au moins une unité d'arrêt de matériau de culture (62) étant adjacente à la première extrémité de rouleau (46), et la première région de surface (642) de la première partie d'arrêt (622) étant à une distance de la première extrémité de rouleau (46) inférieure à la distance à laquelle se trouve la seconde région de surface (644) de la seconde partie d'arrêt (624), et la première région de surface (642) de la première partie d'arrêt (622) étant conçue pour entrer en contact avec le matériau de culture (90) plus tôt que la seconde région de surface (644) de la seconde partie d'arrêt (624) entrant en contact avec le matériau de culture (90) lorsque le corps de rouleau (42) tourne dans une direction de traitement de matériau de culture,
dans laquelle l'au moins une unité d'arrêt de matériau de culture (62) est disposée de manière circonférentielle entre deux saillies adjacentes (52), dans laquelle l'au moins un appareil d'arrêt de matériau de culture (60) sert à limiter un déplacement du matériau de culture axialement le long de l'axe longitudinal central (44) au-delà de l'une de la première extrémité de rouleau (46) et la seconde extrémité de rouleau (48) relativement à un centre du corps de rouleau (42).

2. Presse à balles selon la revendication 1, dans laquelle la première région de surface (642) de la première partie d'arrêt (622) s'étend à travers un orifice de passage (248) et est située entre la plaque de support (242) et le panneau latéral (246).

3. Presse à balles selon au moins une des revendications 1 et 2, dans laquelle l'au moins un appareil d'arrêt de matériau de culture (60) comprend un appareil d'arrêt de matériau de culture (60) placé sur une partie du corps de rouleau (42) adjacente à la première extrémité de rouleau (46) et un autre appareil d'arrêt de matériau de culture (60) placé sur une partie du corps de rouleau (42) adjacente à la seconde extrémité de rouleau (48).

4. Presse à balles selon au moins une des revendications 1 à 3, dans laquelle les deux saillies (52) comprennent des saillies multiples (52), chaque appareil d'arrêt de matériau de culture (60) comprend une unité d'arrêt de matériau de culture (62) disposée entre deux saillies adjacentes parmi les saillies (52).

5. Presse à balles selon au moins une des revendications 1 à 4, dans laquelle chaque saillie (52) définit une forme hélicoïdale, de telle sorte que, entre la même paire de saillies adjacentes parmi les saillies (52), une unité d'arrêt de matériau de culture (62) placée sur la partie du corps de rouleau (42) adjacente à la seconde extrémité de rouleau (48) entre en contact avec le matériau de culture plus tôt qu'une unité d'arrêt de matériau de culture (62) placée sur la partie du corps de rouleau (42) adjacente à la première extrémité de rouleau (46).
